# EUROPÄISCHE PATENTSCHRIFT

(11) **EP 0 847 160 B1**
(45) Veröffentlichungstag und Bekanntmachung des Hinweises auf die Patenterteilung: **12.10.2005**
(21) Anmeldenummer: 97440124.2
(22) Anmeldetag: 03.12.1997
(51) Int. Cl.: H04J 14/02, H04Q 11/00, H04L 12/28, H04L 12/437

(54) **System zur gerichteten Punkt-zu-Mehrpunkt Informationsübertragung**
System for directed point-multipoint information transmission
Système pour la transmission dirigée point à multipoint d'information

(30) Priorität: 03.12.1996 DE 19650088
(43) Veröffentlichungstag der Anmeldung: 10.06.1998
(73) Patentinhaber: ALCATEL, 75008 Paris (FR)
(72) Erfinder: Grammel, Gerd, 73066 Uhingen (DE)
(74) Vertreter: Schätzle, Albin

(56) Entgegenhaltungen:
- EP-A- 0 644 704
- WO-A-92/11709
- GLANCE B ET AL: "OPTICALLY RESTORABLE WDM RING NETWORK USING SIMPLE ADD/DROP CIRCUITRY" JOURNAL OF LIGHTWAVE TECHNOLOGY, IEEE. NEW YORK, US, Bd. 14, Nr. 11, 1. November 1996 (1996-11-01), Seiten 2453-2456, XP000642008 ISSN: 0733-8724
- WUTTISITTIKULKIJ L ET AL: "Multiwavelength self-healing ring transparent networks" GLOBAL TELECOMMUNICATIONS CONFERENCE, 1995. CONFERENCE RECORD. COMMUNICATION THEORY MINI-CONFERENCE, GLOBECOM '95., IEEE SINGAPORE 13-17 NOV. 1995, NEW YORK, NY, USA,IEEE, US, 13. November 1995 (1995-11-13), Seiten 45-49, XP010607525 ISBN: 0-7803-2509-5

## Beschreibung

Die Erfindung betrifft ein System zur gerichteten Punkt-zuMehrpunkt Informationsübertragung in einem ringförmigen Verteilnetz mit einer Zentrale, in die die zu übertragende Information eingespeist und in mindestens zwei in verschiedene Richtungen abgehende Übertragungsleitungen in Form von Signalen weitergeleitet wird, wobei mindestens eine Empfangseinrichtung vorgesehen ist, die Signale aus mindestens einer der Übertragungsleitungen empfängt.

Ein derartiges System ist beispielsweise aus der Firmenzeitschrift "telecom report" der Firma Siemens AG, Ausgabe 3/1996, Seiten 10 bis 13 bekannt.

In unidirektionalen Punkt-zu-Mehrpunktsystemen, wie beispielsweise in einem Kabelfernsehverteilnetz, werden Signale in der Regel von einer Zentrale über optische Splitter und Glasfaserleitungen sowie optische Verstärker baumförmig zu mehreren Empfangseinrichtungen übertragen. Derartige Netzstrukturen sind z. B. in der Firmenzeitschrift "Elektrisches Nachrichtenwesen" der Firma Alcatel SEL, Stuttgart, 3. Quartal 1993, Seiten 248 bis 259 beschrieben.

Bei solchen Systemen empfangen bei einer Störung, beispielsweise durch Leitungsbruch oder nicht ausreichende Verstärkung, einzelne Empfangseinrichtungen oder Gruppen von Empfangseinrichtungen keine Signale mehr oder nur noch Signale mit verminderter Qualität. Daher werden bei dem eingangs zitierten Übertragungssystem sämtliche Empfangseinheiten über mindestens zwei Leitungen direkt von der Zentrale mit Signalen versorgt, wobei die ankommenden Signale jeweils über eine Detektionseinrichtung einem gemeinsamen Schalter zugeführt werden, der nur das stärkste Signal an den eigentlichen Empfänger weiterleitet.

Nachteilig bei diesen Systemen wirkt sich aus, daß pro Empfangseinrichtung mindestens zwei Zuleitungen von der Zentrale, mindestens ein Schalter und mindestens zwei Detektoren zur Überwachung der ankommenden Signale erforderlich sind.

Aufgabe der vorliegenden Erfindung ist es demgegenüber, ein System mit den eingangs genannten Merkmalen dahingehend zu verbessern, daß bei gleicher Funktion und gleicher Fehlersicherheit eine erhebliche Vereinfachung, insbesondere eine Reduktion der minimal erforderlichen Bauteile bewirkt wird.

Erfindungsgemäß wird diese Aufgabe auf ebenso einfache wie wirkungsvolle Art und Weise dadurch gelöst, daß die mindestens zwei Übertragungsleitungen in einem Schaltaufbau zusammenlaufen, daß aus mindestens einer der Übertragungsleitungen zwischen Zentrale und Schaltaufbau die von der Zentrale kommenden Signale sowie die vom Schaltaufbau kommenden Signale teilweise oder vollständig ausgekoppelt und über einen Kombinator oder einen Schalter mindestens einer Empfangseinrichtung zugeleitet werden, und daß im Schaltaufbau an denjenigen von der Zentrale kommenden Übertragungsleitungen, an denen mindestens eine Empfangseinrichtung angekoppelt ist, ein Detektor vorgesehen ist, der bei Nichtvorliegen eines Signales auf der entsprechenden Übertragungsleitung einen Schalter betätigt, welcher die Signale einer anderen von der Zentrale kommenden Übertragungsleitung auf eine Übertragungsleitung umleitet, an die alle diejenigen Empfangseinrichtungen angekoppelt sind, die auch an der entsprechenden vom Detektor überwachten Übertragungsleitung angekoppelt sind.

Im Falle einer Störung, die im Schaltaufbau detektiert wird, können durch entsprechende Zuschaltung von einer nicht gestörten Leitung die betroffenen Empfangseinrichtungen mit Signalen über einen anderen Pfad im Punkt-zu-Mehrpunktsystem versorgt werden. Ein weiterer Vorteil des erfindungsgemäßen Systems gegenüber bekannten Systemen besteht darin, daß in den Übertragungsleitungen eingebaute Verstärker eine Signalverbesserung bei allen mit der Übertragungsleitung angefahrenen Empfängern bewirken, während bei den bekannten Systemen der Einbau eines Verstärkers in eine Übertragungsleitung lediglich eine Signalverbesserung bei nur einer Empfangseinrichtung hervorruft. Außerdem kann die Performance des erfindungsgemäßen Systems auf den fehlerfreien Fall optimiert werden. Eine Detektion von auftretenden Störungen und eine Erkennung der Fehlersituation ist in der Zentrale ohne zusätzliche Alarmierung detektierbar.

Besonders einfach ist eine Ausführungsform des erfindungsgemäßen Systems, bei der im Fehlerfall der Schaltaufbau die von der anderen Übertragungsleitung kommenden Signale auf die entsprechende, vom Detektor überwachte Übertragungsleitung umleitet.

Damit ist der apparative Aufwand minimal, insbesondere sind nur insgesamt zwei Übertragungsleitungen bei beliebig vielen angekoppelten Empfangseinrichtungen erforderlich.

Eine weitere, besonders einfache und preisgünstige Realisierung des erfindungsgemäßen Systems, bei der lediglich eine einzige Koppeleinrichtung pro Empfangseinrichtung erforderlich ist, beinhaltet eine Ankopplung mindestens einer Empfangseinrichtung an eine Übertragungsleitung über eine bidirektionale Koppeleinrichtung.

Besonders bevorzugt ist eine Ausführungsform des erfindungsgemäßen Systems, bei der mindestens eine weitere Übertragungsleitung vorgesehen sind, die vom Schaltaufbau in verschiedene Richtungen abgehen, und an die jeweils mindestens eine Empfangseinrichtung angekoppelt ist.

Damit wird ein besonderer Performancegewinn erzielt, weil pro signalführende Übertragungsleitung im Gegensatz zu dem weiter oben geschilderten Einfachfall nur eine einzige Ankopplungseinrichtung pro Empfangseinheit erforderlich ist, die auch unidirektional sein kann. Damit ergeben sich erheblich geringere Dämpfungsverluste pro Übertragungsleitung.

Ein weiterer Vorteil dieser bevorzugten Ausführungsform besteht darin, daß eine eindeutige Signalrichtung vorgebbar ist. Damit ist eine aktive Signalverstärkung in den Übertragungsleitungen einfacher zu bewerkstelligen. In den jeweils nicht-signalführenden Leitungen können die Verstärker in einem stromlosen Stand-by-Modus betrieben werden.

Bei einer weiteren besonders bevorzugten Ausführungsform des erfindungsgemäßen Systems ist vorgesehen, daß bei mindestens einer Empfangseinrichtung zwei Koppeleinrichtungen zur Signalauskopplung aus einer oder zwei Übertragungsleitungen vorgesehen sind, wobei die erste Koppeleinrichtung von der Zentrale ankommende Signale auskoppelt und an einen Detektor weitergibt, der bei Vorliegen von Signalen einen Schalter schließt und die Signale über den Schalter an die Empfangseinrichtung weitergibt, und wobei die zweite Koppeleinrichtung vom Schaltaufbau kommende Signale auskoppelt, die über den Schalter aber nur dann in die Empfangseinrichtung weitergegeben werden, wenn der Detektor keine Signale aus der ersten Koppeleinrichtung detektiert.

Damit wird eine Vorzugsrichtung der ankommenden Signale auf kürzestem Wege von der Zentrale her festgelegt, so daß die Übertragungswege im fehlerfreien Fall jeweils optimal kurz sind. Außerdem ergeben sich bei dieser Ausführungsform geringere Dämpfungsverluste bei den Signalen, da der Schalter zur Weitergabe der Signale an die Empfangseinrichtung im Durchlaßmodus in der Regel im wesentlichen ungedämpft arbeitet, während beispielsweise ein Kombinator zur Zusammenführung der beiden Signalpfade vor der Empfangseinrichtung eine Dämpfung des Signals von ca. 3 dB bewirkt.

Alternativ zur vorgenannten Ausführungsform kann bei einer weiteren vorteilhaften Ausführungsform des erfindungsgemäßen Systems bei mindestens einer Empfangseinrichtung ein Kombinator zur Zusammenführung der von der Zentrale kommenden, ausgekoppelten Signale mit den vom Schaltaufbau kommenden ausgekoppelten Signalen vorgesehen sein. Ein derartiger Kombinator ist als Bauteil erheblich einfacher und preisgünstiger als ein Schalter mit vorgeschaltetem Detektor. Außerdem werden die beiden Signale von nur einer Übertragungsleitung abgegriffen.

Bei einer weiteren vorteilhaften Ausführungsform ist anstelle einer der Empfangseinrichtungen eine weitere Zentrale mit einem weiteren ringförmigen Verteilnetz an das System angeschlossen.

Dadurch können beispielsweise auch größere Entfernungen mit lediglich einer einzigen Übertragungsleitung überbrückt werden.

Bei einer weiteren Ausführungsform des erfindungsgemäßen Systems schließlich führen von der Zentrale zum Schaltaufbau mindestens drei Übertragungsleitungen. Damit wird zur Ringstruktur des Systems noch ein weiterer Halbring hinzugefügt, der in einer Reihe mit besonders wichtigen Empfängern eine erhöhte Redundanz und damit eine bessere Performance und eine größere Fehlersicherheit gewährt.

In den Rahmen der vorliegenden Erfindung fällt auch ein Schaltaufbau zum geschalteten Weiterleiten von empfangenen Signalen, wobei mindestens zwei Signalübertragungsleitungen in den Schaltaufbau münden, und wobei an mindestens einer einmündenden Übertragungsleitung ein Detektor vorgesehen ist, der bei Nichtvorliegen eines Signales auf der entsprechenden Übertragungsleitung einen Schalter betätigt, welcher die Signale einer anderen Übertragungsleitung auf die vom Detektor überwachte Übertragungsleitung und/oder auf eine dritte Übertragungsleitung umleitet.

Ein derartig aufgebauter Schaltaufbau wird vorzugsweise in einem System der oben genannten Art eingesetzt.

Bei einer speziellen Ausführungsform des erfindungsgemäßen Schaltaufbaus ist vorgesehen, daß genau drei Übertragungsleitungen in den Schaltaufbau münden, wobei an jeder einmündenden Übertragungsleitung ein Detektor vorgesehen ist, der bei Nichtvorliegen eines Signales auf der entsprechenden Übertragungsleitung einen Schalter betätigt, welcher Signale einer anderen Übertragungsleitung auf die vom entsprechenden Detektor überwachte Übertragungsleitung umleitet.

Eine etwas komfortablere, alternative Ausführungsform zeichnet sich dadurch aus, daß vier Übertragungsleitungen in den Schaltaufbau münden, wobei an zwei der einmündenden Übertragungsleitungen jeweils ein Detektor vorgesehen ist, der bei Nichtvorliegen eines Signales auf der entsprechenden Übertragungsleitung einen Schalter betätigt, welcher die Signale der anderen von einem Detektor überwachten Übertragungsleitung auf eine der nicht von einem Detektor überwachten Übertragungsleitungen umleitet.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Die Erfindung ist in der Zeichnung dargestellt und wird anhand von Ausführungsbeispielen näher erläutert. Es zeigen:
- Fig. 1: eine besonders einfache Ausführungsform des erfindungsgemäßen Systems mit bidirektionaler Koppeleinrichtung und Kombinator;
- Fig. 2: eine verbesserte Ausführungsform des erfindungsgemäßen Systems mit zwei unidirektionalen Koppelelementen, einem Detektor und einem Schalter;
- Fig. 3: eine Verbesserung der Ausführungsform nach Fig. 2 durch Hinzufügen eines weiteren Halbrings;
- Fig. 4: eine kaskadierte Ausführungsform des erfindungsgemäßen Systems, bei der anstelle eines Empfängers im ersten Ring eine weitere Zentrale mit nachfolgendem zweiten Ring vorgesehen ist;
- Fig. 5: eine Ausführungsform des erfindungsgemäßen Systems mit doppelter Ringstruktur;
- Fig. 6: eine einfache Ausführungsform des erfindungsgemäßen Schaltaufbaus zum Einsatz in einem Einfachringsystem;
- Fig. 7: eine Ausführungsform des erfindungsgemäßen Schaltaufbaus für ein Einfachringsystem mit zusätzlichem Halbring; und
- Fig. 8: einen erfindungsgemäßen Schaltaufbau zum Einsatz in einem Doppelringsystem.

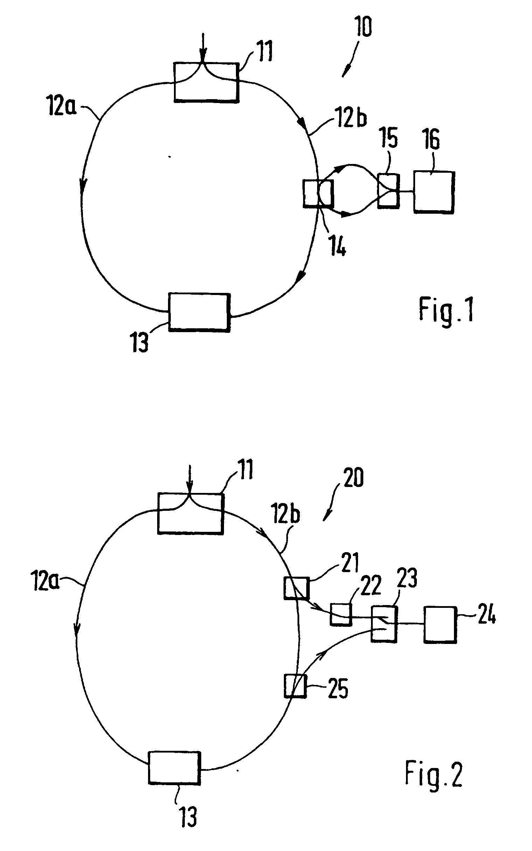

Das in Fig. 1 schematisch dargestellte System 10 zur gerichteten Punkt-zu-Mehrpunkt Informationsübertragung weist ein ringförmiges Verteilnetz mit einer Zentrale 11 auf, in die die zu übertragende Information eingespeist und in zwei in verschiedene Richtungen abgehende Übertragungsleitungen 12a, 12b in Form von Signalen weitergeleitet wird. Die beiden Übertragungsleitungen 12a, 12b laufen in einem Schaltaufbau 13 zusammen. Aus der Übertragungsleitung 12b werden mittels einer bidirektionalen Koppeleinrichtung 14 sowohl in Richtung von der Zentrale 11 auf den Schaltaufbau 13 als auch in der umgekehrten Richtung laufende Signale teilweise ausgekoppelt, in einem Kombinator 15 zusammengeführt und einer Empfangseinrichtung 16 zugeleitet.

Im normalen Betriebsfall endet die Übertragungsleitung 12b im Schaltaufbau 13 blind, so daß in der bidirektionalen Koppeleinrichtung 14 lediglich von der Zentrale 11 ankommende Signale ausgekoppelt und der Empfangseinrichtung 16 zugeführt werden.

Im Schaltaufbau 13 läuft die Übertragungsleitung 12b über einen in Fig. 1 nicht dargestellten Detektor, der bei Nichtvorliegen eines Signales auf der Übertragungsleitung 12b einen ebenfalls in Fig. 1 nicht dargestellten Schalter betätigt, der die gleichfalls in den Schaltaufbau laufende zweite Übertragungsleitung 12a mit der Übertragungsleitung 12b verbindet. Dadurch wird der Empfänger 16 über die Koppeleinrichtung 14 und den Kombinator 15 mit Signalen aus der Übertragungsleitung 12a beschickt, falls eine Störung durch Unterbrechung der Übertragungsleitung 12b auf der Strecke zwischen der Zentrale 11 und der Koppeleinrichtung 14 stattgefunden hat. Falls die im Schaltaufbau 13 detektierte Störung auf der Übertragungsleitung 12b im Bereich zwischen dem Koppelelement 14 und dem Schaltaufbau 13 stattgefunden hat, endet zwar das vom Schaltaufbau 13 auf die Übertragungsleitung 12b gelegte Signal aus der Übertragungsleitung 12a blind an der Bruchstelle, jedoch wird in diesem Falle der Empfänger 16 immer noch über den intakten Abschnitt der Übertragungsleitung 12b zwischen Zentrale 11 und Koppeleinrichtung 14 mit Signalen beschickt.

Fig. 2 zeigt eine gegenüber Fig. 1 verbesserte Ausführungsform, nämlich ein System 20, bei dem an der Übertragungsleitung 12b die vom Schalter 11 kommenden Signale mittels einer unidirektionalen Koppeleinrichtung 21 ausgekoppelt und über einen Detektor 22 einem Schalter 23 zugeführt werden. Falls der Detektor 22 das Vorliegen von Signalen feststellt, veranlaßt er den Schalter 23 zum Durchschalten auf einen Empfänger 24. Anderenfalls verbindet der Schalter 23 den Empfänger 24 mit einer weiteren unidirektionalen Koppeleinrichtung 25, die Signale von der Übertragungsleitung 12 abgreift, welche aus dem Schalter 13 kommen.

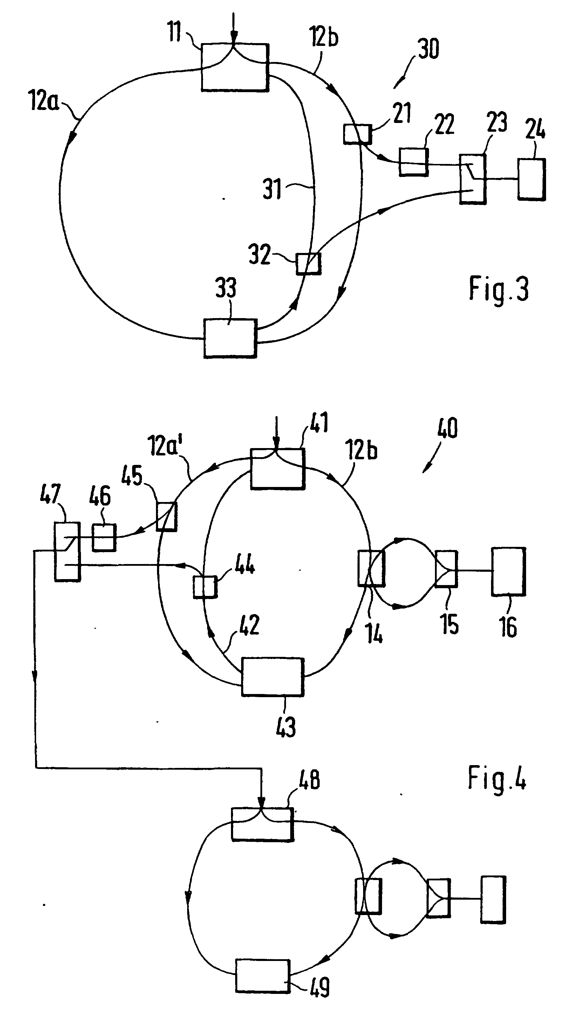

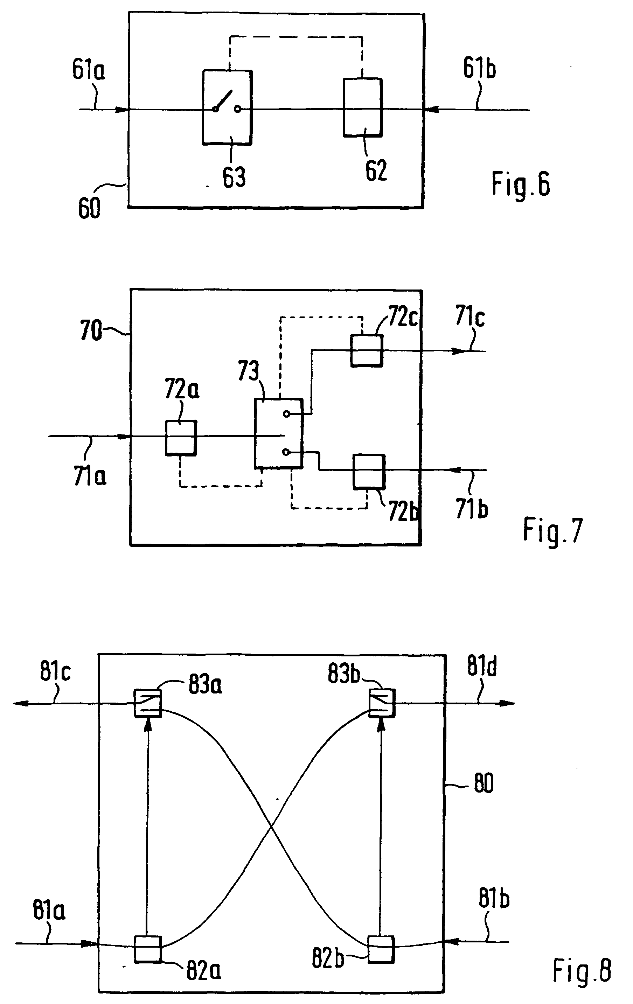

In Fig. 3 ist schematisch eine gegenüber Fig. 2 weiter verbesserte Ausführungsform dargestellt, bei der ein System 30 zusätzlich noch eine weitere Übertragungsleitung 31 in Form eines Halbrings aufweist. In diesem Falle wird das vom Schaltaufbau 33 kommende Signal mittels einer unidirektionalen Koppeleinrichtung 32 von der Übertragungsleitung 31 abgekoppelt und dem Schalter 23 zugeführt. Die genaue Funktionsweise des Schaltaufbaus 33 ist in Fig. 7 dargestellt.

Zwar ist in den Figuren 1 bis 3 jeweils nur eine einzige Empfangseinrichtung 16 bzw. 24 gezeigt, jedoch können beliebig viele weitere Empfangseinrichtungen in den dargestellten Systemen 10, 20 oder 30 durch Auskoppeln von Signalen an weiteren Stellen der Übertragungsleitungen 12a, 12b, 31 an das jeweilige Verteilnetz angekoppelt werden.

Das System 40, welches in Fig. 4 schematisch dargestellt ist, besteht aus einer Kaskade von zwei ringförmigen Verteilnetzen. Auf der rechten Seite des in der oberen Bildhälfte dargestellten ersten Verteilnetzes wird über eine Übertragungsleitung 12b ein Empfänger 16 mit Signalen aus der Zentrale 41 beschickt. Auf der linken Seite ist parallel zur Übertragungsleitung 12a', die von der Zentrale 41 zu einem Schaltaufbau 43 verläuft, eine weitere Übertragungsleitung 42 vorgesehen, auf die Signale aus dem Schaltaufbau 43 gelegt und mittels einer Koppeleinrichtung 44 auf einen Schalter 47 ausgekoppelt werden können. Im normalen Betriebszustand ist der Schalter 47 aufgrund eines entsprechenden Gut-Signals eines Detektors 46 so durchgeschaltet, daß er eine Verbindung zwischen einer Koppeleinrichtung 45, die von der Zentrale 41 kommende Signale aus der Übertragungsleitung 12a' abkoppelt, mit einer anstelle eines Empfängers vorgesehenen weiteren Zentrale 48 herstellt. Die weitere Zentrale 48 ist wiederum Ausgangspunkt eines weiteren ringförmigen Verteilnetzes mit einem weiteren Schaltaufbau 49. Dies ist insbesondere dann vorteilhaft, wenn größere Strecken zwischen dem ersten und dem zweiten Verteilnetz überwunden werden sollen.

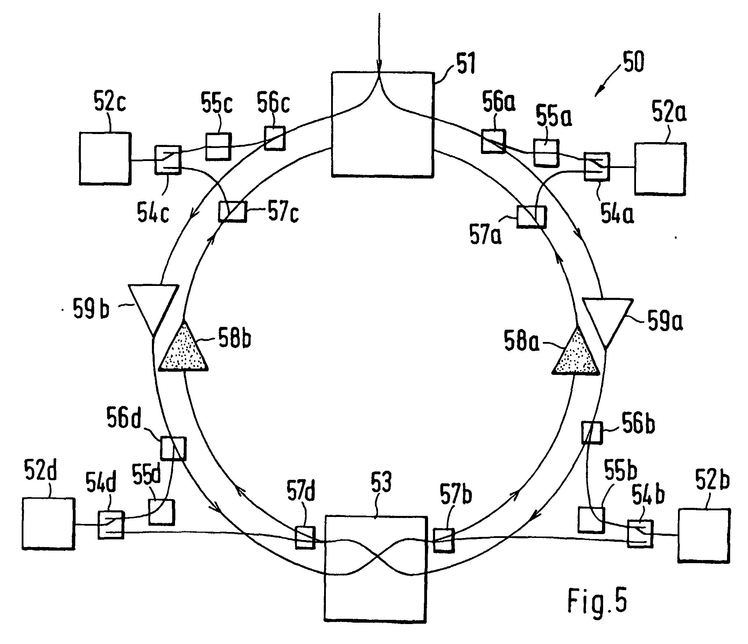

Das in Fig. 5 dargestellte System 50 unterscheidet sich von den vorher beschriebenen Systemen dadurch, daß eine doppelte Ringstruktur und damit eine erheblich größere Redundanz vorgesehen ist. Eine Zentrale 51 ist mittels zweier Übertragungsleitungen, die einen äußeren Ring bilden, mit einem Schaltaufbau 53 verbunden. Außerdem gehen vom Schaltaufbau 53 in der Figur innen dargestellte weitere Übertragungsleitungen ab, die einen inneren Ring bilden. Auf den inneren Übertragungsleitungen werden vom Schaltaufbau 53 abgehende Signale transportiert.

Im normalen Betriebszustand werden die an das Verteilnetz angeschlossenen Empfänger 52a bis 52d über Koppeleinrichtungen 56a bis 56d mit Signalen aus dem äußeren Ring beschickt, die jeweils von einem zugehörigen Detektor 55a bis 55d überwacht werden. Wenn die Detektoren 55a bis 55d das Vorliegen von Signalen detektieren, schalten sie den jeweils zugehörigen Schalter 54a bis 54d so durch, daß der jeweilige Empfänger 52a bis 52d mit der zugehörigen Koppeleinrichtung 56a bis 56d verbunden ist.

Falls einer der Detektoren 55a bis 55d jedoch eine Fehlfunktion feststellt, veranlaßt er den zugehörigen Schalter 54a bzw. 54b bzw. 54c bzw. 54d zum Durchschalten auf eine Koppeleinrichtung 57a bzw. 57b bzw. 57c bzw. 57d, die jeweils ein vom Schaltaufbau 53 kommendes Signal am inneren Ring abgreift. Die genaue Funktionsweise des Schaltaufbaus 53 für eine Doppelringstruktur, wie sie in Fig. 5 dargestellt ist, wird in Fig. 8 näher erläutert.

Übertragungsleitungen des inneren Ringes des Systems 50 enthalten Signalverstärker 58a, 58b und die Übertragungsleitungen des äußeren Ringes enthalten Signalverstärker 59a, 59b. Selbstverständlich können derartige Signalverstärker auch bei den Systemen 10 bis 40 gemäß den Figuren 1 bis 4 und bei allen anderen erfindungsgemäßen Konfigurationen eingesetzt werden.

Fig. 6 zeigt schematisch eine besonders einfache Ausführungsform eines erfindungsgemäßen Schaltaufbaus 60, der beispielsweise in den Systemen 10, 20 gemäß den Figuren 1 bzw. 2 eingesetzt werden kann. In den Schaltaufbau 60 münden zwei Übertragungsleitungen 61a, 61b, die beispielsweise Signale von einer in Fig. 6 nicht dargestellten Zentrale zum Schaltaufbau 60 transportieren. Falls ein im Schaltaufbau 60 vorgesehener Detektor 62 das Nichtvorliegen eines Signales auf der Übertragungsleitung 61b feststellt, schaltet er einen Schalter 63 durch, so daß Signale von der Übertragungsleitung 61a auf die Übertragungsleitung 61b geleitet werden.

Bei nicht dargestellten Ausführungsformen könnte der Schaltaufbau gemäß Fig. 6 auch dahingehend erweitert werden, daß zwischen der ankommenden Übertragungsleitung 61a und dem Schalter 63 ein weiterer Detektor vorgesehen ist, der das ordnungsgemäße Vorliegen von Signalen auf der Übertragungsleitung 61a überwacht und entsprechend ebenfalls den Schalter 63 ansteuert.

Fig. 7 zeigt einen erfindungsgemäßen Schalter 70, der in Einfachringsystemen mit zusätzlichem Halbring eingesetzt werden kann, wie sie beispielsweise in den Figuren 3 und 4 gezeigt sind. In den Schalter 70 münden Übertragungsleitungen 71a und 71b, die im normalen Betriebszustand Signale in den Schalter 70 einleiten. Weiterhin ist eine Übertragungsleitung 71c vorgesehen, die in den oben beschriebenen Ausführungsbeispielen einen Halbring mit vom Schaltaufbau 70 abgehenden Signalen beschicken kann.

Im Schaltaufbau 70 werden die Übertragungsleitungen 71a bis 71c durch Detektoren 72a bis 72c jeweils auf das Vorliegen von ankommenden Signalen überwacht. Im Zentrum des Schaltaufbaus 70 ist ein Schalter 73 dargestellt, der drei Eingänge aufweist, wobei an jedem Eingang eine Verbindungsleitung zu einem der drei Detektoren 72a bis 72c und damit zu jeder der Übertragungsleitungen 71a bis 71c einmündet. Im normalen Betriebszustand ist der Schalter 73 in einer Stellung, bei der keine Verbindung zwischen seinen drei Eingängen hergestellt ist, das heißt, auf den Übertragungsleitungen 71a bis 71c ankommende Signale enden blind im Schalter 73.

Falls beispielsweise der Detektor 72a das Nichtvorliegen eines Signales auf der Leitung 71a feststellt, veranlaßt er den Schalter 73, in eine Schaltstellung zu gehen, bei der die Übertragungsleitung 71b mit der Übertragungsleitung 71a verbunden wird. Falls der Detektor 72b das Nichtvorliegen eines Signales von der ankommenden Übertragungsleitung 71b feststellt, wird er den Schalter 73 veranlassen, in eine Schaltstellung zu gehen, bei der die Übertragungsleitung 71a mit der Übertragungsleitung 71c verbunden ist, welche als Ersatzleitung für die an der Übertragungsleitung 71b angekoppelten Empfänger dient und einen zur Übertragungsleitung 71b parallel verlaufenden Halbring bildet. Dadurch werden die an den Übertragungsleitungen 71b und 71c angekoppelten Empfänger nunmehr über die Übertragungsleitung 71c mit Signalen versorgt.

Sobald die Störung behoben ist, kann beispielsweise durch ein auf der Übertragungsleitung 71c in Richtung auf den Schaltaufbau 70 abgesandtes Signal dem Detektor 72c anzeigen, daß der Schalter 73 nunmehr wieder in die Betriebsstellung zurückzuschalten ist.

Figur 8 schließlich zeigt einen erfindungsgemäßen Schaltaufbau 80, der für den Einsatz in einem Doppelringsystem geeignet ist, wie es beispielsweise in Fig. 5 dargestellt ist.

In den Schaltaufbau 80 münden zwei Übertragungsleitungen 81a, 81b, die jeweils Signale auf den Schaltaufbau 80 zuführen. Außerdem gehen vom Schaltaufbau 80 Übertragungsleitungen 81c, 81d ab, welche Signale vom Schaltaufbau 80 wegführen. Die Übertragungsleitungen 81a und 81b werden jeweils durch einen Detektor 82a bzw. 82b auf das Vorhandensein von Signalen überwacht.

Falls der Detektor 82a das Fehlen eines Signales auf der Übertragungsleitung 81a feststellt, veranlaßt er einen Schalter 83a, eine Verbindung zwischen der signalführenden Übertragungsleitung 81b mit der signalabführenden Übertragungsleitung 81c herzustellen. Ebenso steuert der Detektor 82b, der die Übertragungsleitung 81b überwacht, bei Feststellung einer Störung den Schalter 83b derart an, daß dieser eine Verbindung zwischen der signalführenden Übertragungsleitung 81a mit der signalabführenden Übertragungsleitung 81d herstellt.

Auf diese Weise werden entweder die an die Übertragungsleitung 81a angeschlossenen Empfänger bei einem Defekt in der Übertragungsleitung 81a über die Ersatzleitung 81c mit Signalen von der Übertragungsleitung 81b versorgt oder die an der Übertragungsleitung 81b angekoppelten Empfänger werden bei einem Defekt an der Übertragungsleitung 81b über die Ersatzleitung 81d mit Signalen von der Übertragungsleitung 81a versorgt. Außer in dem unwahrscheinlichen Fall, daß weder von der Übertragungsleitung 81a noch von der Übertragungsleitung 81b ein Signal im Schaltaufbau 80 ankommt, können auf diese Weise sämtliche Empfänger im System auch bei Auftreten einer Störung mit Signalen beschickt werden.

## Patentansprüche

1. System zur gerichteten Punkt-zu-Mehrpunkt Informationsübertragung in einem ringförmigen Verteilnetz mit einer Zentrale, in die die zu übertragende Information eingespeist und in mindestens zwei in verschiedene Richtungen abgehende Übertragungsleitungen in Form von Signalen weitergeleitet wird, wobei mindestens eine Empfangseinrichtung vorgesehen ist, die Signale aus mindestens einer der Übertragungsleitungen empfängt,
**dadurch gekennzeichnet,**
**daß** die mindestens zwei Übertragungsleitungen (12a, 12b; 12a'; 31; 42; 61a, 61b; 71a, 71b, 71c; 81a, 81b, 81c, 81d) in einem Schaltaufbau (13; 33; 43; 49; 53; 60; 70; 80) zusammenlaufen, daß aus mindestens einer der Übertragungsleitungen (12a'; 12b; 31; 42) zwischen Zentrale (11; 41; 48; 51) und Schaltaufbau (13; 33; 43; 49; 53) die von der Zentrale (11; 41; 48; 51) kommenden Signale sowie die vom Schaltaufbau (13; 33; 43; 49; 53) kommenden Signale teilweise oder vollständig ausgekoppelt und über einen Kombinator (15) oder einen Schalter (23; 47; 54a, 54b, 54c, 54d) mindestens einer Empfangseinrichtung (16; 24; 52a, 52b, 52c, 52d) zugeleitet werden,
und **daß** im Schaltaufbau (13; 33; 43; 49; 53) an denjenigen von der Zentrale (11; 41; 48; 51) kommenden Übertragungsleitungen (12b; 12a'; 61b; 71a, 71b; 81a, 81b), an denen mindestens eine Empfangseinrichtung (16; 24; 52a, 52b, 52c, 52d) angekoppelt ist, ein Detektor (62; 72a, 72b; 82a, 82b) vorgesehen ist, der bei Nichtvorliegen eines Signales auf der entsprechenden Übertragungsleitung (12b; 12a'; 61b; 71a, 71b; 81a, 81b) einen Schalter (63; 73; 83a, 83b) betätigt, welcher die Signale einer anderen von der Zentrale (11; 41; 48; 51) kommenden Übertragungsleitung (12a; 12b; 61a; 71b, 71a; 81b, 81a) auf eine Übertragungsleitung (12b; 31; 42; 61b; 71a, 71c; 81c, 81d) umleitet, an die alle diejenigen Empfangseinrichtungen (16; 24; 52a, 52b, 52c, 52d) angekoppelt sind, die auch an der entsprechenden vom Detektor (62; 72a, 72b; 82a, 82b) überwachten Übertragungsleitung (12b; 12a'; 61b; 71a, 71b; 81a, 81b) angekoppelt sind.

2. System nach Anspruch 1, **dadurch gekennzeichnet, daß** der Schalter (63; 73) die von der anderen Übertragungsleitung (61a; 71b) kommenden Signale auf die entsprechende, vom Detektor (62; 72a) überwachte Übertragungsleitung (61b; 71a) umleitet.

3. System nach einem der Ansprüche 1 oder 2, **dadurch gekennzeichnet, daß** die Ankopplung mindestens einer Empfangseinrichtung (16) an eine Übertragungsleitung (12b) über eine bidirektionale Koppeleinrichtung (14) erfolgt.

4. System nach Anspruch 1, **dadurch gekennzeichnet, daß** mindestens zwei weitere Übertragungsleitungen (81c, 81d) vorgesehen sind, die vom Schaltaufbau (53; 80) in verschiedene Richtungen abgehen, und an die jeweils mindestens eine Empfangseinrichtung (52a, 52b, 52c, 52d) angekoppelt ist.

5. System nach einem der vorhergehenden Ansprüche, **dadurch gekennzeichnet, daß** bei mindestens einer Empfangseinrichtung zwei Koppeleinrichtungen (21, 25; 32; 45, 44; 56a, 57a, 56b, 57b, 56c, 57c, 56d, 57d) zur Signalauskopplung aus einer oder zwei Übertragungsleitungen (12b; 31; 12a', 42) vorgesehen sind, wobei die erste Koppeleinrichtung (21; 45; 56a, 56b, 56c, 56d) von der Zentrale (11; 41; 51) ankommende Signale auskoppelt und an einen Detektor (22; 46; 55a, 55b, 55c, 55d) weitergibt, der bei Vorliegen von Signalen einen Schalter (23; 47; 54a, 54b, 54c, 54d) schließt und die Signale über den Schalter (23; 47; 54a, 54b, 54c, 54d) an die Empfangseinrichtung (24; 48; 52a, 52b, 52c, 52d) weitergibt, und wobei die zweite Koppeleinrichtung (25; 32; 44; 57a, 57b, 57c, 57d) vom Schaltaufbau (13; 33; 43; 53) kommende Signale auskoppelt, die über den Schalter (23; 47; 54a, 54b, 54c, 54d) aber nur dann in die Empfangseinrichtung (24; 48; 52a, 52b, 52c, 52d) weitergegeben werden, wenn der Detektor (22; 46; 55a, 55b, 55c, 55d) keine Signale aus der ersten Koppeleinrichtung (21; 45; 56a, 56b, 56c, 56d) detektiert.

6. System nach einem der Ansprüche 1 bis 4, **dadurch gekennzeichnet, daß** bei mindestens einer Empfangseinrichtung (16) ein Kombinator (15) zur Zusammenführung der von der Zentrale (11) kommenden, ausgekoppelten Signale mit den vom Schaltaufbau (13; 43) kommenden ausgekoppelten Signalen vorgesehen ist.

7. System nach einem der vorhergehenden Ansprüche, **dadurch gekennzeichnet, daß** anstelle einer der Empfangseinrichtungen eine weitere Zentrale (48) mit einem weiteren ringförmigen Verteilnetz an das System (40) angeschlossen ist.

8. System nach einem der vorhergehenden Ansprüche, **dadurch gekennzeichnet, daß** von der Zentrale (11; 41; 51) zum Schaltaufbau (33; 43; 53) mindestens drei Übertragungsleitungen (12a, 12b, 31; 12a', 12b, 42) führen.

9. Schaltaufbau zum geschalteten Weiterleiten von empfangenen Signalen, wobei mindestens zwei Signalübertragungsleitungen (61a, 61b; 71a, 71b, 71c; 81a, 81b, 81c, 81d) in den Schaltaufbau (60; 70; 80) münden, und wobei an mindestens einer einmündenden Übertragungsleitung (61b; 71a, 71b; 81a, 81b) ein Detektor (62; 72a, 72b; 82a, 82b) vorgesehen ist, der bei Nichtvorliegen eines Signales auf der entsprechenden Übertragungsleitung (61b; 71a, 71b; 81a, 81b) einen Schalter (63; 73; 83a, 83b) betätigt, welcher die Signale einer anderen Übertragungsleitung (61a; 71b, 71a; 81b, 81a) auf die vom Detektor (62; 72a) überwachte Übertragungsleitung (61b; 71a) und/oder auf eine dritte Übertragungsleitung (71c; 81c, 81d) umleitet.

10. Schaltaufbau nach Anspruch 9, **dadurch gekennzeichnet, daß** genau drei Übertragungsleitungen (71a, 71b, 71c) in den Schaltaufbau (70) münden, wobei an jeder einmündenden Übertragungsleitung (71a, 71b, 71c) ein Detektor (72a, 72b, 72c) vorgesehen ist, der bei Nichtvorliegen eines Signales auf der entsprechenden Übertragungsleitung (71a, 71b, 71c) einen Schalter (73) betätigt, welcher Signale einer anderen Übertragungsleitung (71b) auf die vom entsprechenden Detektor (72a) überwachte Übertragungsleitung (71a) und/oder auf eine andere Übertragungsleitung (71c) umleitet.

11. Schaltaufbau nach Anspruch 9, **dadurch gekennzeichnet, daß** vier Übertragungsleitungen (81a, 81b, 81c, 81d) in den Schaltaufbau (80) münden, wobei an zwei der einmündenden Übertragungsleitungen (81a, 81b) jeweils ein Detektor (82b, 82a) vorgesehen ist, der bei Nichtvorliegen eines Signales auf der entsprechenden Übertragungsleitung (81a, 81b) einen Schalter (83a, 83b) betätigt, welcher die Signale der anderen von einem Detektor (82b, 82a) überwachten Übertragungsleitung (81b, 81a) auf eine der nicht von einem Detektor (82a, 82b) überwachten Übertragungsleitungen (81c, 81d) umleitet.

## Claims

1. System for directed point-to-multipoint information transmission in a ring-type distribution network with a central station into which the information to be transmitted is fed and forwarded in the form of signals into at least two transmission lines departing in different directions, wherein at least one reception device is provided which receives signals from at least one of the transmission lines,
**characterised in that**
the at least two transmission lines (12a, 12b; 12a'; 31; 42; 61a, 61b; 71a, 71b, 71c; 81a, 81b, 81c, 81d) converge in a switching structure (13; 33; 43; 49; 53; 60; 70; 80), **in that** the signals coming from the central station (11; 41; 48; 51) and the signals coming from the switching structure (13; 33; 43; 49; 53) are partially or fully extracted from at least one of the transmission lines (12a'; 12b; 31; 42) between the central station (11; 41; 48; 51) and the switching structure (13; 33; 43; 49; 53) and are sent via a combiner (15) or a switch (23; 47; 54a, 54b, 54c, 54d) to at least one reception device (16; 24; 52a, 52b, 52c, 52d),
and **in that** a detector (62; 72a, 72b; 82a, 82b) is provided in the switching structure (13; 33; 43; 49; 53), on those transmission lines (12b; 12a'; 61b; 71a; 81a, 81b) coming from the central station (11; 41; 48; 51) to which at least one reception device (16; 24; 52a, 52b, 52c, 52d) is coupled, and when a signal is not present on the corresponding transmission line (12b; 12a'; 61b; 71a, 71b; 81a, 81b) the detector (62; 72a, 72b; 82a, 82b) actuates a switch (63; 73; 83a, 83b) which reroutes the signals of another transmission line (12a; 12b; 61a; 71b, 71a; 81b, 81a) coming from the central station (11; 41; 48; 51) onto a transmission line (12b; 31; 42; 61b; 71a, 71c; 81c, 81d) to which all the reception devices (16; 24; 52a, 52b, 52c, 52d) which are also coupled to the corresponding transmission line (12b; 12a'; 61b; 71a, 71b; 81a, 81b) monitored by the detector (62; 72a, 72b; 82a, 82b) are coupled.

2. System according to Claim 1, **characterised in that** the switch (63; 73) reroutes the signals coming from the other transmission line (61a; 71b) onto the corresponding transmission line (61b; 71a) monitored by the detector (62; 72a).

3. System according to Claim 1 or 2, **characterised in that** the coupling of at least one reception device (16) to a transmission line (12b) is carried out via a bidirectional coupling device (14).

4. System according to Claim 1, **characterised in that** at least two further transmission lines (81c, 81d) are provided, which depart from the circuit structure (53; 80) in different directions and to each of which at least one reception device (52a, 52b, 52c, 52d) is coupled.

5. System according to one of the preceding claims, **characterised in that** two coupling devices (21, 25; 32; 45, 44; 56a, 57a, 56b, 57b, 56c, 57c, 56d, 57d) for signal extraction from one or two transmission lines (12b; 31; 12a', 42) are provided in at least one reception device, wherein the first coupling device (21; 45; 56a, 56b, 56c, 56d) extracts signals arriving from the central station (11; 41; 51) and forwards them to a detector (22; 46; 55a, 55b, 55c, 55d) which, when signals are present, closes a switch (23; 47; 54a, 54b, 54c, 54d) and forwards the signals via the switch (23; 47; 54a, 54b, 54c, 54d) to the reception device (24; 48; 52a, 52b, 52c, 52d), and wherein the second coupling device (25; 32; 44; 57a, 57b, 57c, 57d) extracts signals coming from the switching structure (13; 33; 43; 53) which are forwarded via the switch (23; 47; 54a, 54b, 54c, 54d) into the reception device (24; 48; 52a, 52b, 52c, 52d) only when the detector (22; 46; 55a, 55b, 55c, 55d) detects no signals from the first coupling device (21; 45; 56a, 56b, 56c, 56d).

6. System according to one of Claims 1 to 4, **characterised in that** a combiner (15) for combining the extracted signals coming from the central station (11) with the extracted signals coming from the switching structure (13; 43) is provided in at least one reception device (16).

7. System according to one of the preceding claims, **characterised in that** instead of one of the reception devices, a further central station (48) with a further ring-type distribution network is connected to the system (40).

8. System according to one of the preceding claims, **characterised in that** at least three transmission lines (12a, 12b, 31; 12a', 12b, 42) lead from the central station (11; 41; 51) to the switching structure (33; 43; 53).

9. Switching structure for the switched forwarding of received signals, wherein at least two signal transmission lines (61a, 61b; 71a, 71b, 71c; 81a, 81b, 81c, 81d) lead into the switching structure (60; 70; 80), and wherein a detector (62; 72a, 72b; 82a, 82b) is provided on at least one incoming transmission line (61b; 71a, 71b; 81a, 81b) and, when a signal is not present on the corresponding transmission line (61b; 71a, 71b; 81a, 81b), actuates a switch (63; 73; 83a, 83b) which reroutes the signals of another transmission line (61a; 71b, 71a; 91b, 81a) onto the transmission line (61b; 71a) monitored by the detector (62; 72a) and/or onto a third transmission line (71c; 81c, 81d).

10. Switching structure according to Claim 9, **characterised in that** precisely three transmission lines (71a, 71b, 71c) lead into the switching structure (70), wherein a detector (72a, 72b, 72c) is provided on each incoming transmission line (71a, 71b, 71c) and, when a signal is not present on the corresponding transmission line (71a, 71b, 71c), actuates a switch (73) which reroutes signals of another transmission line (71b) onto the transmission line (71a) monitored by the corresponding detector (72a) and/or onto another transmission line (71c).

11. Switching structure according to Claim 9, **characterised in that** four transmission lines (81a, 81b, 81c, 81d) lead into the switching structure (80), wherein a detector (82b, 82a) is respectively provided on two of the incoming transmission lines (81a, 81b) and, when a signal is not present on the corresponding transmission line (81a, 81b), actuates a switch (83a, 83b) which reroutes the signals of the other transmission line (81b, 81a) monitored by a detector (82b, 82a) onto one of the transmission lines (81c, 81d) not monitored by a detector (82a, 82b).

## Revendications

1. Système pour la transmission d'information dirigée de point à multipoint dans un réseau de distribution en anneau comprenant une centrale dans laquelle les informations à transmettre sont injectées et sont retransmises dans des lignes de transmission partant dans au moins deux directions différentes sous la forme de signaux, au moins un dispositif de réception étant prévu, lequel reçoit les signaux provenant d'au moins l'une des lignes de transmission,
**caractérisé en ce**
**que** les au moins deux lignes de transmission (12a, 12b ; 12a' ; 31 ; 42 ; 61a, 61b ; 71a, 71b, 71c ; 81a, 81b, 81c, 81d) convergent dans une structure de commutation (13 ; 33 ; 43 ; 49 ; 53 ; 60 ; 70 ; 80), que les signaux en provenance de la centrale (11 ; 41 ; 48 ; 51) ainsi que les signaux en provenance de la structure de commutation (13 ; 33 ; 43 ; 49 ; 53) sont découplés entièrement ou partiellement d'au moins l'une des lignes de transmission (12a' ; 12b ; 31 ; 42) entre la centrale (11 ; 41 ; 48 ; 51) et la structure de commutation (13 ; 33 ; 43 ; 49 ; 53) puis acheminés à au moins un dispositif de réception (16 ; 24 ; 52a, 52b, 52c, 52d) par le biais d'un combinateur (15) ou d'un commutateur (23 ; 47 ; 54a, 54b, 54c, 54d), et que dans la structure de commutation (13 ; 33 ; 43 ; 49 ; 53), sur les lignes de transmission (12b ; 12a' ; 61b ; 71a, 71b ; 81a, 81b) en provenance de la centrale (11 ; 41 ; 48 ; 51) auxquelles est connecté au moins un dispositif de réception (16 ; 24 ; 52a, 52b, 52c, 52d), il est prévu un détecteur (62 ; 72a, 72b ; 82a, 82b) qui, en l'absence de signal sur la ligne de transmission (12b ; 12a' ; 61b ; 71a, 71b ; 81a, 81b) correspondante, actionne un commutateur (63 ; 73 ; 83a, 83b) qui dérive les signaux d'une autre ligne de transmission (12a ; 12b ; 61a ; 71b, 71a ; 81b, 81a) provenant de la centrale (11 ; 41 ; 48 ; 51) sur une ligne de transmission (12b ; 31 ; 42 ; 61b ; 71a, 71c; 81c, 81d) à laquelle sont connectés tous les dispositifs de réception (16 ; 24 ; 52a, 52b, 52c, 52d) qui sont également connectés à la ligne de transmission (12b ; 12a' ; 61b ; 71a, 71b ; 81a, 81b) correspondante surveillée par le détecteur (62 ; 72a, 72b ; 82a, 82b).

2. Système selon la revendication 1, **caractérisé en ce que** le commutateur (63 ; 73) dérive les signaux provenant de l'autre ligne de transmission (61a ; 71b) sur la ligne de transmission (61b ; 71a) correspondante surveillée par le détecteur (62 ; 72a).

3. Système selon l'une des revendications 1 ou 2, **caractérisé en ce que** la connexion d'au moins un dispositif de réception (16) à une ligne de transmission (12b) s'effectue par le biais d'un dispositif de connexion bidirectionnel (14).

4. Système selon la revendication 1, **caractérisé en ce que** sont prévues au moins deux lignes de transmission (81c, 81d) supplémentaires qui partent de la structure de commutation (53 ; 80) dans différentes directions et qui sont connectées à chaque fois à l'au moins dispositif de réception (52a, 52b, 52c, 52d).

5. Système selon l'une des revendications précédentes, **caractérisé en ce qu'**il est prévu de prévoir sur au moins un dispositif de réception deux dispositifs de connexion (21, 25 ; 32 ; 45, 44 ; 56a, 56b, 56c, 57c, 56d, 57d) pour le découplage du signal d'une ou de deux lignes de transmission (12b ; 31b 12a', 42), le premier dispositif de connexion (21 ; 45 ; 56a, 56b, 56c, 57c, 56d) découplant les signaux en provenance de la centrale (11 ; 41 ; 51) et les retransmettant à un détecteur (22 ; 46 ; 55a, 55b, 55c, 55d) qui, en présence de signaux, ferme un commutateur (23 ; 47 ; 54a, 54b, 54c, 54d) et retransmet les signaux par le biais du commutateur (23 ; 47 ; 54a, 54b, 54c, 54d) au dispositif de réception (24 ; 48 ; 52a, 52b, 52c, 52d), et le deuxième dispositif de connexion (25 ; 32 ; 44 ; 57a, 57b, 57c, 57d) découplant les signaux en provenance de la structure de commutation (13 ; 33 ; 43 ; 53), lesquels ne sont cependant retransmis au dispositif de réception (24 ; 48 ; 52a, 52b, 52c, 52d) par le biais du commutateur (23 ; 47 ; 54a, 54b, 54c, 54d) que lorsque le détecteur (22 ; 46 ; 55a, 55b, 55c, 55d) ne détecte aucun signal en provenance du premier dispositif de connexion (21 ; 45 ; 56a, 56b, 56c, 57c, 56d).

6. Système selon l'une des revendications 1 à 4, **caractérisé en ce qu'**il est prévu sur au moins un dispositif de réception (16) un combinateur (15) destiné à regrouper les signaux découplés en provenance de la centrale (11) avec les signaux découplés en provenance de la structure de commutation (13 ; 43).

7. Système selon l'une des revendications précédentes, **caractérisé en ce qu'**au lieu de l'un des dispositifs de réception, une centrale supplémentaire (48) comprenant un autre réseau de distribution de forme annulaire est raccordée au système (40).

8. Système selon l'une des revendications précédentes, **caractérisé en ce qu'**au moins trois lignes de transmission (12a, 12b, 31 ; 12a', 12b, 42) vont de la centrale (11 ; 41 ; 51) vers la structure de commutation (33 ; 43 ; 53).

9. Structure de commutation destinée à la retransmission commutée des signaux reçus, au moins deux lignes de transmission de signaux (61a, 61b ; 71a, 71b, 71c ; 81a, 81b, 81c, 81d) débouchant dans la structure de commutation (60 ; 70 ; 80) et un détecteur (62 ; 72a, 72b ; 82a, 82b) étant prévu sur au moins une ligne de transmission (61b ; 71a, 71b ; 81a, 81b) débouchante qui, en l'absence d'un signal sur la ligne de transmission (61b ; 71a, 71b; 81a, 81b) correspondante, actionne un commutateur (63 ; 73 ; 83a, 83b) qui dérive les signaux d'une autre ligne de transmission (61a ; 71b, 71a ; 81b, 81a) sur la ligne de transmission (61b ; 71a) surveillée par le détecteur (62 ; 72a) et/ou sur une troisième ligne de transmission (71c ; 81c, 81d).

10. Structure de commutation selon la revendication 9, **caractérisée en ce que** précisément trois lignes de transmission (71a, 71b, 71c) débouchent dans la structure de commutation (70), un détecteur (72a, 72b, 72c) étant prévu sur chaque ligne de transmission (71a, 71b, 71c) débouchante qui, en l'absence d'un signal sur la ligne de transmission (71a, 71b, 71c) correspondante, actionne un commutateur (73) qui dérive les signaux d'une autre ligne de transmission (71b) sur la ligne de transmission (71a) surveillée par le détecteur (72a) correspondant et/ou sur une autre ligne de transmission (71c).

11. Structure de commutation selon la revendication 9, **caractérisée en ce que** quatre lignes de transmission (81a, 81b, 81c, 81d) débouchent dans la structure de commutation (80), un détecteur (82b, 82a) étant prévu sur deux des lignes de transmission (81a, 81b) débouchantes qui, en l'absence d'un signal sur la ligne de transmission (81a, 81b) correspondante, actionne un commutateur (83a, 83b) qui dérive les signaux de l'autre ligne de transmission (81b, 81a) surveillée par un détecteur (82b, 82a) sur l'une des lignes de transmission (81c, 81d) non surveillées par un détecteur (82a, 82b).
